# FASCICULE DE BREVET EUROPEEN

(11) **EP 3 325 878 B1**
(45) Date de publication et mention de la délivrance du brevet: **29.05.2019**
(21) Numéro de dépôt: 16741903.5
(22) Date de dépôt: 15.07.2016
(51) Int. Cl.: F23C 6/04, B01J 8/26, B01J 8/38, B01J 8/00, F23C 10/00, F23C 10/10

(54) **PROCEDE ET INSTALLATION CLC AVEC PRODUCTION D'AZOTE DE HAUTE PURETE**
CLC-VERFAHREN UND -ANLAGE MIT HERSTELLUNG VON HOCHSAUBEREM STICKSTOFF
CLC METHOD AND FACILITY WITH PRODUCTION OF HIGH-PURITY NITROGEN

(30) Priorité: 21.07.2015 FR 1556884
(43) Date de publication de la demande: 30.05.2018
(73) Titulaire: IFP Energies nouvelles, 92500 Rueil-Malmaison (FR); Total Raffinage Chimie, 92400 Courbevoie (FR)
(72) Inventeur: GUILLOU, Florent, 69360 Ternay (FR); BERTHOLIN, Stephane, 69630 Chaponost (FR); YAZDANPANAH, Mahdi, 76600 Le Havre (FR)
(74) Mandataire: IFP Energies nouvelles
(86) Numéro de dépôt international: PCT/EP2016/066977
(87) Numéro de publication internationale: WO 2017/013038

(56) Documents cités:
- WO-A1-2010/043797
- WO-A1-2014/091024
- FR-A1- 2 640 728
- EDRISI A ET AL: "Hydrogen, nitrogen and carbon dioxide production through chemical looping using iron-based oxygen carrier - A Green plant for H2and N2produc", INTERNATIONAL JOURNAL OF HYDROGEN ENERGY, vol. 39, no. 20, 23 mai 2014 (2014-05-23), pages 10380-10391, XP028854278, ISSN: 0360-3199, DOI: 10.1016/J.IJHYDENE.2014.03.108

## Description

### Domaine de l'invention

La présente invention concerne le domaine de la combustion de charges hydrocarbonées par oxydo-réduction en boucle chimique (CLC), et plus particulièrement la production d'azote dans le CLC.

### Contexte général

La combustion en boucle chimique, ou procédé de Chemical Looping Combustion (CLC) dans sa terminologie anglo-saxonne, est un procédé consistant à mettre en oeuvre des réactions d'oxydo-réduction d'une masse active, typiquement un oxyde métallique, pour décomposer la réaction de combustion en deux réactions successives : une première réaction d'oxydation de la masse active au contact d'un gaz oxydant, typiquement de l'air, et une deuxième réaction de réduction de la masse active au contact de la charge dont on souhaite la combustion. Le procédé CLC s'apparente à l'oxycombustion à la différence principale que la combustion n'est pas alimentée par un flux d'oxygène pur dédié, comme dans le cas de l'oxycombustion, mais par la masse active oxydo-réductrice jouant le rôle de transporteur d'oxygène. Ce matériau solide se présente sous la forme de particules transportées pneumatiquement par les réactifs gazeux. Ces particules sont oxydées au contact de l'air dans une première zone réactionnelle, appelée réacteur air. Elles sont ensuite transportées dans une seconde zone réactionnelle appelée réacteur fuel où elles sont mises en contact avec une charge hydrocarbonée solide, liquide ou gazeuse dont on souhaite effectuer la combustion. L'oxygène transporté par les particules de matériau transporteur d'oxygène alimente la combustion de la charge. Il en résulte un effluent gazeux formé par la combustion de la charge et un flux de particules réduites. Les particules sont renvoyées au réacteur air pour y être ré-oxydées, fermant ainsi la boucle.

Il convient de noter que, de manière générale, les termes oxydation et réduction sont utilisés en relation avec l'état respectivement oxydé ou réduit de la masse active. Le réacteur d'oxydation, aussi appelé réacteur air, est celui dans lequel la masse oxydo-réductrice est oxydée et le réacteur de réduction, aussi appelé réacteur fuel, est le réacteur dans lequel la masse oxydo-réductrice est réduite. Les réacteurs opèrent en lit fluidisé et la masse active circule entre le réacteur d'oxydation et le réacteur de réduction. La technologie du lit fluidisé circulant est utilisée pour permettre le passage continu de la masse active de son état oxydé dans le réacteur d'oxydation à son état réduit dans le réacteur de réduction.

La combustion par boucle chimique permet de produire de l'énergie, sous la forme de vapeur ou d'électricité par exemple. La chaleur de combustion de la charge est similaire à celle rencontrée dans la combustion classique. Celle-ci correspond à la somme des chaleurs de réduction et d'oxydation dans la boucle chimique. La chaleur est généralement extraite par des échangeurs situés à l'intérieur, en paroi ou en appendice des réacteurs fuel et/ou air, sur les lignes de fumées, ou sur les lignes de transfert de la masse active.

Le principal intérêt de la mise en oeuvre d'une combustion en boucle chimique est de réaliser une séparation intrinsèque du CO₂ de l'air de combustion, dans le but de capter le CO₂ et de le stocker, par exemple dans un aquifère profond, ou de le valoriser, par exemple en l'employant pour améliorer le rendement des exploitations pétrolières dans des procédés de récupération assistée du pétrole (EOR pour Enhanced Oil Recovery en anglais) ou de gaz (EGR pour Enhanced Gas Recovery en anglais).

Il résulte de ce mode de combustion un autre avantage : produire un air appauvri, à savoir un flux très riche en azote. Cet air appauvri est obtenu à l'issue de l'oxydation de la masse active dans le réacteur air.

Le degré de pureté en azote de cet effluent dépend notamment du mode de combustion choisi, et en particulier de l'excès d'air requis pour assurer une ré-oxydation satisfaisante des particules de la masse active dans le réacteur air. Typiquement, pour viser une combustion totale, un excès d'air pour la réaction d'oxydation est souhaitable afin d'être sûr de ré-oxyder totalement les particules dans le réacteur air. Cet excès d'air est aussi appelé sur-stoechiométrie en air dans la présente description.

La mise en oeuvre d'un excès d'air se traduit par un débit d'air plus important que ce qui serait nécessaire pour conduire la réaction d'oxydation dans des conditions stoechiométriques. Plus l'air est en excès pour réaliser la réaction d'oxydation de la masse active, moins l'effluent sera pur en azote, et, en particulier plus il contiendra une quantité importante d'oxygène résiduel puisque l'oxygène de l'air n'est pas totalement utilisé pour oxyder la masse active. Cet excès d'air est, entre autres, gouverné par l'équilibre thermodynamique de la masse active oxydée vis-à-vis de l'effluent gazeux, i.e. l'air appauvri, en sortie du réacteur air.

Une sur-stoechiométrie en air dans le réacteur air est donc nécessaire pour assurer une oxydation satisfaisante de la masse active dans le cadre d'une combustion totale. Or cette condition est incompatible avec la production d'un flux d'azote de haute pureté en une seule passe tel que classiquement réalisé dans un procédé CLC.

D'une façon générale, l'air appauvri en sortie du réacteur air contient de l'ordre de 2 % en volume d'oxygène, le complémentaire étant majoritairement composé d'azote et d'argon. Ces 2 % d'oxygène correspondent à une sur-stoechiométrie de l'ordre de 10 % pour la combustion totale de la charge. Cette quantité d'oxygène, même si elle est relativement faible, est encore bien supérieure aux spécifications requises concernant l'azote pour certaines applications, par exemple de l'ordre de 10 ppmv (partie par million en volume) pour certaines applications requérant des conditions de type anoxiques.

La production d'un flux d'azote de haute pureté est en effet particulièrement intéressante car celui-ci peut être utilisé dans diverses applications, notamment dans le domaine de l'industrie pétrolière. Il peut par exemple être utilisé en raffinerie en tant que gaz inerte dans différents procédés de raffinage du pétrole ou pour le traitement des eaux de production, ou en tant que gaz injecté dans le sous-sol dans des procédés EOR.

Il existe ainsi un besoin de purifier de son oxygène résiduel le flux d'azote produit dans un procédé CLC, notamment lorsqu'il est visé une combustion totale de la charge.

La production d'azote de haute pureté par CLC est abordée dans l'article de Pröll et al., 2010 (« Syngas and a separate nitrogen/argon stream via chemical looping reforming - A 140kw pilot plant study », T. Pröll et al., Fuel 89 (2010):1249-1256). Cet article porte sur un procédé CLC visant à produire du gaz de synthèse. Dans ce cas de figure, seule une oxydation partielle de la charge hydrocarbonée est recherchée afin de produire le gaz de synthèse, et l'oxydation du solide transporteur d'oxygène est par conséquent limitée. Les essais divulgués montrent que dans ce cas de figure, une consommation quasi-totale de l'oxygène de l'air peut être atteinte dans le réacteur air, et qu'il est ainsi possible de produire naturellement un effluent composé exclusivement d'azote et d'argon.

Cependant ce mode de fonctionnement n'est pas envisageable lorsque qu'une combustion totale de la charge hydrocarbonée est recherchée, car l'oxydation de la masse active transportant l'oxygène doit être importante afin de limiter la quantité de masse active mise en oeuvre. Cette contrainte nécessite d'opérer le réacteur d'oxydation avec un excès d'air (sur-stoechiométrie en air), ce qui conduit à une concentration d'oxygène de quelques pourcents dans le flux d'azote produit, comme expliqué plus haut.

La production d'azote de haute pureté par CLC est également divulguée dans la demande de brevet WO 2014/091024A1. Dans ce document, de l'azote produit dans une unité CLC est utilisé pour extraire le gaz naturel des réservoirs géologiques. L'azote est injecté dans le réservoir afin d'en augmenter la pression et améliorer le taux de récupération du gaz naturel. Dans le procédé CLC divulgué, la charge traitée dans l'unité CLC est du gaz naturel dilué qui contient une quantité importante d'azote (plus de 20%) provenant de l'injection d'azote dans le réservoir d'hydrocarbures.

Le flux d'azote est produit dans l'unité CLC à partir de de l'effluent gazeux sortant du réacteur d'oxydation alimenté en un gaz contenant de l'azote et de l'oxygène, et en un porteur d'oxygène de type métal ou oxyde métallique sous une forme réduite. Le gaz contenant de l'azote et de l'oxygène alimentant le réacteur d'oxydation est typiquement de l'air ou de l'air enrichi en azote par une technique de séparation membranaire avant son introduction dans le réacteur d'oxydation.

Il est mentionné que le retrait presque complet de l'oxygène de l'air dans le réacteur air est atteint en une seule passe dans le réacteur air, ou alternativement en faisant passer le flux d'air plusieurs fois dans le réacteur air, ou encore en faisant passer le flux d'air dans plusieurs réacteurs air jusqu'à ce que l'oxygène soit en grande partie éliminé. Une étape de purification du flux sortant du réacteur air peut également être mise en oeuvre pour atteindre une teneur inférieure à 10 ppm d'oxygène. Une séparation par voie catalytique est envisagée.

Cependant, quelle que soit la technologie de séparation employée, une telle étape supplémentaire, réalisée en dehors de la boucle chimique, sur le gaz avant ou après son passage dans le réacteur air, est couteuse en termes d'investissements et de dépenses énergétiques. En outre, il n'est pas montré comment une teneur inférieure à 10 ppm peut être atteinte sans l'étape supplémentaire de purification.

L'article d'Edrisi et al., 2014, traite également de la production d'azote de haute pureté dans un procédé CLC (« Hydrogen, nitrogen and carbon dioxide production through chemical looping using iron-based oxygen carrier - A green plant for H2 and N2 production », A. Edrisi et al., International Journal of Hydrogen Energy 39(2014): 10380-10391). Les auteurs proposent un procédé CLC pour produire simultanément des effluents d'hydrogène, d'azote et de CO₂ à haute pureté. La production d'azote est réalisée au niveau du réacteur d'oxydation du solide transporteur d'oxygène par consommation de l'oxygène de l'air au contact du solide. La nécessité d'opérer en excès d'air est prise en compte par les auteurs, et un réacteur d'oxydation étagé avec deux étapes d'oxydation est divulgué : la première étape consiste à mettre en contact l'oxyde réduit avec de l'air, et est réalisée en défaut d'air, c'est-à-dire que, le débit d'air dans cette première étape est inférieur au débit d'air nécessaire pour réaliser l'oxydation complète de la masse active. De l'azote de haute pureté est alors produit à l'issue de cette première étape. La deuxième étape consiste à mettre en contact l'oxyde partiellement oxydé issu de la première étape avec de l'air, et est réalisée en excès d'air pour assurer l'oxydation complète de la masse active.

Cependant, selon cette configuration du CLC, la production d'azote est limitée car la première étape est opérée avec de l'air qui contient une quantité très importante d'oxygène à ôter (près de 21% en volume d'oxygène).

### Objectifs et résumé de l'invention

La présente invention vise à surmonter, au moins en partie, les problèmes de l'art antérieur exposés ci-dessus.

La présente invention vise de manière générale à fournir un procédé et une installation CLC qui permettent de produire de l'azote de haute pureté, notamment lorsqu'une combustion totale est souhaitée, avec en particulier un bon rendement et une minimisation des coûts de production en termes d'investissements et de dépenses énergétiques.

Ainsi, pour atteindre au moins l'un des objectifs susvisés, parmi d'autres, la présente invention propose, selon un premier aspect, un procédé CLC d'une charge d'hydrocarbonée, où une masse active oxydo-réductrice sous forme de particules circule entre au moins une zone de réduction et deux zones d'oxydation opérant en lit fluidisé, comprenant les étapes suivantes :
(a) on réalise la combustion de ladite charge hydrocarbonée par réduction de la masse active oxydo-réductrice mise en contact avec la charge dans au moins une zone de réduction ;
(b) on réalise, dans une première zone d'oxydation, une première étape d'oxydation de la masse active oxydo-réductrice réduite obtenue à l'issue de l'étape (a) par mise en contact avec une première fraction d'un flux d'air appauvri en oxygène, pour produire un flux de diazote comprenant une quantité inférieure ou égale à 100 ppmv de dioxygène et un flux de masse active oxydo-réductrice partiellement ré-oxydée ;
(c) on réalise, dans une deuxième zone d'oxydation, une deuxième étape d'oxydation du flux de masse active oxydo-réductrice partiellement ré-oxydée obtenu à l'issue de l'étape (b), par mise en contact avec de l'air pour produire un flux d'air appauvri en oxygène et un flux de masse active oxydo-réductrice ré-oxydée destiné à être utilisé à l'étape (a).
(d) on divise ledit flux d'air appauvri en oxygène obtenu à l'issue de l'étape (c) pour former la première fraction du flux d'air appauvri en oxygène utilisée à l'étape (b) et une deuxième fraction complémentaire du flux d'air appauvri en oxygène extrait de la boucle chimique ;

On peut ajuster la première fraction du flux d'air appauvri en oxygène à l'étape (d) à la quantité de masse active oxydo-réductrice réduite obtenue à l'issue de l'étape (a) et envoyée dans la première zone d'oxydation de manière à obtenir un flux de diazote comprenant une fraction de dioxygène donnée.

De préférence, le flux de diazote contient une quantité inférieure ou égale à 10 ppmv de dioxygène.

Avantageusement, on applique une sur-stoechiométrie en oxygène lors de la deuxième étape d'oxydation (c), de manière à obtenir un flux d'air appauvri en oxygène comprenant environ 2% de dioxygène.

De préférence, la masse active oxydo-réductrice comprend un oxyde de manganèse, le flux d'air appauvri en oxygène comprend environ 2% de dioxygène, et la première fraction du flux d'air appauvri en oxygène est inférieure à 7,4 % du flux d'air appauvri d en oxygène e manière à produire un flux de diazote comprenant moins de 10 ppmv de dioxygène.

Selon une mise en oeuvre du procédé, la première zone d'oxydation est un réacteur comportant une enceinte munie de moyens d'échange de chaleur comprenant un fluide caloporteur, et, au cours de la première étape d'oxydation (b) :
- on crée un lit fluidisé de particules de masse active oxydo-réductrice au moyen de l'injection de la première fraction du flux d'air appauvri en oxygène dans ladite enceinte,
- on effectue un échange de chaleur entre le lit fluidisé de particules et le fluide caloporteur ;
- on évacue ledit flux de diazote par une première sortie située dans une partie supérieure de l'enceinte, et
- on évacue le flux de masse active oxydo-réductrice partiellement ré-oxydée par une deuxième sortie située dans une partie inférieure de l'enceinte pour l'envoyer dans la deuxième zone de réaction, de préférence au moyen d'une vanne pneumatique.

Selon ce mode de réalisation, on opère préférentiellement la première zone d'oxydation de manière à ce que la vitesse superficielle de l'air appauvri en oxygène dans l'enceinte soit comprise entre 2 fois et 10 fois la vitesse terminale de chute des particules de la masse active oxydo-réductrice.

Selon une autre mise en oeuvre du procédé, les première et deuxième étapes d'oxydation (b) et (c) sont réalisées respectivement dans un premier réacteur d'oxydation et un deuxième réacteur d'oxydation tous deux de type riser, et :
- à l'étape (b) on opère ledit premier réacteur d'oxydation de manière à ce que la vitesse superficielle de l'air appauvri en oxygène dans ledit premier réacteur soit comprise entre 2 et 15 m/s ;
- on sépare d'un mélange sortant au sommet du premier réacteur d'oxydation le flux de diazote et le flux de masse active oxydo-réductrice dans un séparateur gaz/solide tel qu'un cyclone ;
- on envoie le flux de masse active partiellement ré-oxydée vers le deuxième réacteur au moyen d'une ligne de transport comprenant un siphon pour assurer l'étanchéité au gaz entre les premier et deuxième réacteur ; et
- à l'étape (c) on opère ledit deuxième réacteur d'oxydation de manière à ce que la vitesse superficielle de l'air dans ledit deuxième réacteur soit comprise entre 3 et 10 m/s.

La pression de la première fraction du flux d'air appauvri en oxygène peut être élevée avant son entrée dans la première zone d'oxydation.

De manière préférée, la mise en contact des particules de la masse active oxydo-réductrice réduite et de la première fraction du flux d'air appauvri en oxygène dans la première zone d'oxydation, et la mise en contact du flux de particules de la masse active oxydo-réductrice partiellement oxydées et de l'air dans la deuxième zone d'oxydation, se font à co-courant.

L'invention propose, selon un deuxième aspect, une installation pour réaliser la combustion d'une charge hydrocarbonée selon le procédé décrit, comprenant :
- au moins une zone de réduction pour réaliser l'étape (a) de combustion, comportant une entrée pour un flux de masse active oxydo-réductrice sous forme de particules, une entrée pour ladite charge hydrocarbonée, une évacuation pour un flux gazeux et pour la masse active oxydo-réductrice réduite;
- une première zone d'oxydation pour réaliser la première étape d'oxydation (b), comportant une entrée reliée à l'évacuation de la masse active oxydo-réductrice réduite issue de la zone de réduction, une entrée pour la première fraction du flux d'air appauvri, une sortie pour le flux de diazote et une évacuation pour le flux de masse active oxydo-réductrice partiellement ré-oxydée ;
- une deuxième zone d'oxydation pour réaliser la deuxième étape d'oxydation (c), comportant une entrée reliée à l'évacuation du flux de masse active oxydo-réductrice partiellement ré-oxydée de la première zone d'oxydation, une entrée pour un flux d'air, une sortie pour le flux d'air appauvri et une évacuation d'un flux de masse active oxydo-réductrice ré-oxydée connectée la zone de réduction ;
- des moyens de division du flux d'air appauvri positionnés à la sortie du flux d'air appauvri de la deuxième zone d'oxydation, comportant une première conduite pour envoyer la première fraction du flux d'air appauvri vers l'entrée d'air appauvri de la première zone d'oxydation et une deuxième conduite pour sortir de la boucle chimique une deuxième fraction complémentaire du flux d'air appauvri en oxygène;
les zones de réduction et d'oxydation comportant chacune des moyens de fluidisation.

De préférence, l'installation comprend des moyens pour ajuster la première fraction du flux d'air appauvri en oxygène à la quantité de masse active oxydo-réductrice réduite introduite dans la première zone d'oxydation de manière à obtenir un flux de diazote comprenant une quantité de dioxygène donnée, de préférence une quantité de dioxygène inférieure ou égale à 10 ppmv.

Selon un mode de réalisation, la première zone d'oxydation est un réacteur comportant une enceinte munie des moyens d'échange de chaleur et des moyens de fluidisation, les moyens d'échange de chaleur comportant un fluide caloporteur et une surface d'échange de chaleur en contact avec le fluide caloporteur et la masse active oxydo-réductrice et séparant le fluide caloporteur de la masse active oxydo-réductrice, les moyens de fluidisation comportant des moyens d'injection de l'air appauvri en oxygène pour former un lit fluidisé de particules, le lit fluidisé étant en contact avec la surface d'échange de chaleur, l'évacuation pour le flux de diazote est située dans une partie supérieure de l'enceinte, et la sortie pour le flux de masse active oxydo-réductrice partiellement ré-oxydée est située dans une partie inférieure de l'enceinte connectée à l'entrée du flux de masse active oxydo-réductrice partiellement ré-oxydée de la deuxième zone de réaction.

Selon un autre mode de réalisation, l'installation comprend :
- un premier réacteur d'oxydation de type riser en tant que première zone d'oxydation ;
- un deuxième réacteur d'oxydation de type riser en tant que deuxième zone d'oxydation ;
- un séparateur gaz/solide, tel qu'un cyclone, positionné en aval du premier réacteur d'oxydation de manière à recevoir un mélange sortant au sommet du premier réacteur d'oxydation, le mélange comprenant le flux de diazote et le flux de masse active oxydo-réductrice partiellement ré-oxydée ;
- un siphon positionné sur une ligne de transport du flux de masse active partiellement ré-oxydée depuis le séparateur vers le deuxième réacteur d'oxydation, pour assurer l'étanchéité au gaz entre les premier et deuxième réacteurs d'oxydation.

Avantageusement, l'installation comprend en outre dispositif de compression, tel qu'un compresseur ou un soufflante, positionné sur la première conduite envoyant la première fraction du flux d'air appauvri en oxygène vers la première zone d'oxydation.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 est un schéma de principe de mise en oeuvre d'un procédé CLC.
La figure 2 est un schéma de principe de mise en oeuvre de l'oxydation de la masse active oxydo-réductrice avec production de diazote dans le procédé CLC de l'invention.
Les figures 3 et 4 sont des schémas illustrant deux exemples de mise en oeuvre de l'oxydation de la masse active avec production de diazote dans le procédé CLC de l'invention.
La figure 5 est un diagramme représentant l'équilibre thermodynamique réactif simulé d'un exemple de masse active à base d'oxyde de manganèse partiellement réduit en présence d'un air appauvri, pour différent ratios de flux massique de masse active sur le flux massique d'oxygène.

Sur les figures, les mêmes références désignent des éléments identiques ou analogues.

### Description de l'invention

L'objet de l'invention est de proposer une purification, intégrée au CLC, de l'effluent produit à l'issue de l'oxydation de la masse active oxydo-réductrice avec de l'air, de manière à produire un flux d'azote de haute pureté, pouvant alors être utilisé dans de nombreuses applications telles que la récupération assistée du pétrole ou du gaz ou le raffinage du pétrole.

Plus précisément, la présente invention propose, pour produire un tel flux de diazote de haute pureté, de purifier une fraction de l'air appauvri produit dans la boucle chimique en le mettant au contact de la masse active oxyde réductrice dans son état le plus réduit.

Par flux d'azote de haute pureté, on entend un flux d'azote comprenant essentiellement du diazote, c'est-à-dire au moins 99% de diazote, et une quantité de dioxygène inférieure ou égale à 100 ppmv, et de préférence inférieure ou égale à 10 ppmv. La part complémentaire peut être formée par les autres gaz habituellement présents dans l'air, tel que les gaz rares, essentiellement de l'argon, mais également du néon, krypton, xénon, tel que du dioxyde de carbone (CO₂), ou du méthane. Il peut également contenir d'autres gaz sous forme de traces, c'est-à-dire à des quantités infimes, inférieures à 1 ppmv, tel que du dihydrogène, de l'ozone et du radon.

Dans la présente description on utilise le terme oxygène pour désigner à la fois l'élément chimique oxygène mais également la molécule de dioxygène quand il est fait référence, implicitement ou explicitement, au gaz. De même, on utilise le terme azote pour désigner à la fois l'élément chimique azote mais également la molécule de diazote quand il est fait référence, implicitement ou explicitement, au gaz.

On note également que dans la présente description, les expressions « matériau transporteur d'oxygène » et « masse active oxydo-réductrice » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. L'expression abrégée « porteur d'oxygène » ou « masse active » ou le terme « solide » pourront être également utilisés.

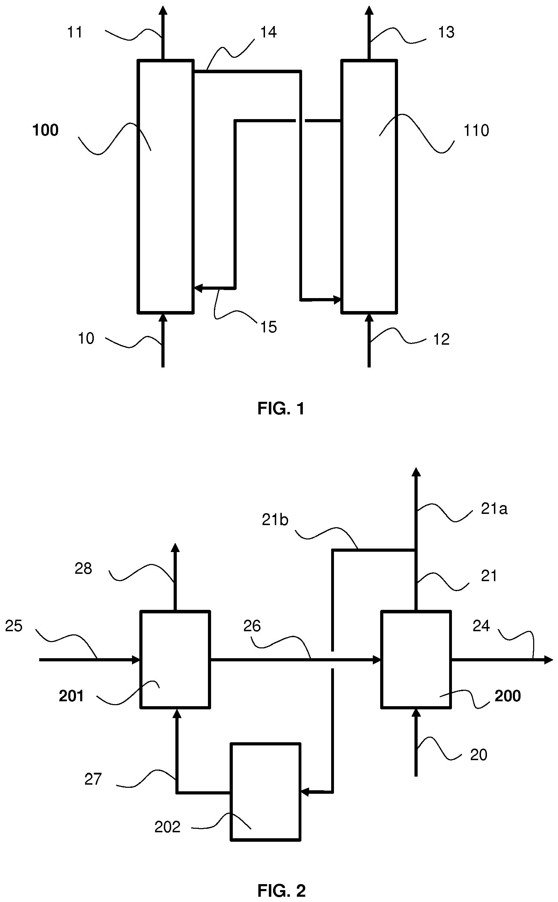

La figure 1 est un schéma représentant le principe de fonctionnement général d'une combustion en boucle chimique. Un porteur d'oxygène réduit 15 est mis au contact d'un flux d'air 10 dans une zone réactionnelle 100 précédemment définie comme le réacteur air (ou réacteur d'oxydation). Il en résulte un flux d'air appauvri 11 et un flux de particules ré-oxydées 14. Le flux de particules de porteur d'oxygène oxydé 14 est transféré dans la zone de réduction 110 précédemment défini comme le réacteur fuel (ou réacteur de réduction). Le flux de particules 14 est mis au contact d'un combustible 12, typiquement une charge hydrocarbonée. Il en résulte un effluent de combustion 13 et un flux de particules de porteur d'oxygène réduit 15. Dans un souci de simplification, la représentation de la figure 1 ne comprend pas les divers équipements pouvant faire partie de l'unité CLC, pour l'échange de chaleur, la mise en pression, la séparation ou les éventuelles recirculations de matière autour des réacteurs air et fuel.

Dans la zone de réduction 110, la charge hydrocarbonée 12 est mise en contact à co-courant avec la masse active oxydo-réductrice sous forme de particules pour réaliser la combustion de ladite charge par réduction de la masse active oxydo-réductrice.

La masse active oxydo-réductrice MₓO_{y}, M représentant un métal, est réduit à l'état , par l'intermédiaire de la charge hydrocarbonée CₙHₘ, qui est corrélativement oxydée en CO₂ et H₂O, selon la réaction (1) ci-dessous, ou éventuellement en mélange CO + H₂ selon les proportions utilisées.

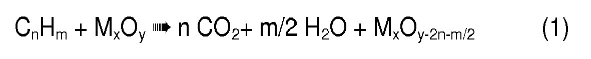

Dans la présente invention, on vise la combustion totale de la charge hydrocarbonée.

La combustion de la charge au contact de la masse active est réalisée à une température généralement comprise entre 600°C et 1400°C, préférentiellement entre 800°C et 1000°C. Le temps de contact varie selon le type de charge combustible utilisée. Il varie typiquement entre 1 secondes et 10 minutes, par exemple de préférence entre 1 et 5 minutes pour une charge solide ou liquide, et par exemple de préférence de 1 à 20 secondes pour une charge gazeuse.

Un mélange comprenant les gaz issus de la combustion et les particules de la masse active est évacué au sommet de la zone de réduction 110. Des moyens de séparation de gaz/solide (non représentés), tels qu'un cyclone, permettent de séparer les gaz de combustion 13 des particules solides de la masse active dans leur état le plus réduit 15. Ces dernières sont envoyées vers la zone d'oxydation 100 pour être ré-oxydées, à une température généralement comprise entre 600°C et 1400°C, préférentiellement entre 800 et 1000°C.

Dans le réacteur d'oxydation 100, la masse active est restaurée à son état oxydé MₓO_{y} au contact de l'air 10, selon la réaction (2) ci-dessous, avant de retourner vers la zone de réduction 110, et après avoir été séparée de l'air appauvri en oxygène 11 évacué au sommet de la zone d'oxydation 100.

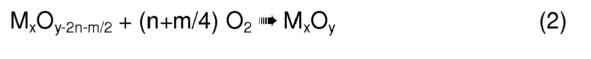

La masse active, passant alternativement de sa forme oxydée à sa forme réduite et inversement, décrit un cycle d'oxydo-réduction.

Les charges hydrocarbonées traitées peuvent être des charges hydrocarbonées solide, liquide ou gazeuse : combustibles gazeux (ex. : gaz naturel, syngas, biogaz), liquides (ex. : fuel, bitume, diesel, essences etc.), ou solides (ex. : charbon, coke, pet-coke, biomasse, sables bitumineux, etc.).

La masse oxydo-réductrice peut être composée d'oxydes métalliques, tels que par exemple des oxydes de Fe, Ti, Ni, Cu, Mn, Co, V, seuls ou en mélange, pouvant provenir de minerais (par exemple l'ilménite ou la pyrolusite) ou être synthétiques (par exemple des particules d'oxyde de nickel supportées sur alumine NiO/NiAl₂O₄), avec ou sans liant, et présente les propriétés d'oxydo-réduction requises et les caractéristiques nécessaires à la mise en oeuvre de la fluidisation. La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 3 % poids, ce qui permet de n'utiliser qu'une fraction de la capacité de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures sur le parcours du lit.

La masse active est sous la forme de particules fluidisables, appartenant aux groupes A, B ou C de la classification de Geldart. A titre d'exemple, et de manière non limitative, les particules de la masse active oxydo-réductrice peuvent appartenir au groupe B de la classification de Geldart, et présenter une granulométrie telle que plus de 90 % des particules ont une taille comprise entre 100 µm et 500 µm, de préférence comprise entre 150 µm et 300 µm, pour une densité comprise entre 1 000 g/m³ et 5 000 kg/m³ et préférentiellement entre 1 500 g/m³ et 4 000 kg/m³.

La masse active oxydo-réductrice peut subir une phase d'activation de manière à augmenter ses capacités réactives, pouvant consister en une phase de montée en température, de préférence progressive, et de préférence sous atmosphère oxydante (par exemple sous air).

Le procédé CLC selon l'invention suit le schéma général présenté à la figure 1, à l'exception de la partie oxydation du porteur d'oxygène, qui est décrite de manière générale ci-dessous, en relation avec la figure 2.

Selon l'invention, le procédé CLC inclut une purification d'une fraction de l'air appauvri formé lors de l'oxydation de la masse active oxydo-réductrice.

Il comprend ainsi les étapes suivantes :
*(a) une étape de combustion de la charge hydrocarbonée.*
   Elle est réalisée par réduction de la masse active oxydo-réductrice par une mise en contact avec la charge dans au moins une zone de réduction, tel que décrit plus haut en relation avec la figure 1.
(b) une première étape d'oxydation de la masse active oxydo-réductrice réduite obtenue à l'issue de l'étape (a): elle est réalisée dans une première zone d'oxydation 201, par mise en contact de la masse active issue de (a) avec une première fraction d'un flux d'air appauvri, pour produire un flux de diazote comprenant une quantité inférieure ou égale à 100 ppmv de dioxygène et un flux de masse active oxydo-réductrice partiellement ré-oxydée.
(c) une deuxième étape d'oxydation du flux de masse active oxydo-réductrice partiellement ré-oxydée obtenu à l'issue de l'étape (b) : elle est réalisée dans une deuxième zone d'oxydation 200 par mise en contact de la masse active issue de (b) avec de l'air pour produire ledit flux d'air appauvri et un flux de masse active oxydo-réductrice ré-oxydée destiné à être utilisé à l'étape (a).
(d) une étape de division du flux d'air appauvri obtenu à l'issue de l'étape (c) : cette division permet de former la première fraction d'air appauvri utilisée à l'étape (b) et une deuxième fraction complémentaire d'air appauvri extrait de la boucle chimique.

Les étapes (b) à (d) sont détaillées ci-dessous.

### Etape (b) : première étape d'oxydation et production d'un flux de diazote

Le flux de particules de porteur d'oxygène dans son état le plus réduit 25 est introduit dans une première zone d'oxydation 201.

Par état le plus réduit, on entend l'état de réduction maximum de la masse active oxydo-réductrice qui sort de la zone de réduction 110, et qui est dans sa forme MₓO_{y-2n-m/2} selon les équations (1) et (2). Par exemple, dans le cas du couple oxydo-réducteur Fe₂O₃/FeO, l'état de réduction maximum de la masse active correspond à la forme FeO. La proportion de masse active sous forme FeO dépend de la quantité d'oxygène transférée lors de l'étape de réduction qui est comprise entre 1 et 3% poids.

Cette première zone réactionnelle 201 a pour fonction la ré-oxydation partielle la masse active oxydo-réductrice, et ce par contact avec une fraction 21b de l'air appauvri produit par une deuxième zone d'oxydation 200, cette dernière ayant le même rôle que le réacteur air 100, à savoir ré-oxyder totalement la masse active oxydo-réductrice pour que celle-ci soit à nouveau utilisée dans le réacteur fuel 110. La mise en contact des particules et de la fraction d'air appauvri est réalisée à co-courant.

Il résulte de cette première étape d'oxydation un effluent gazeux 28 dont la concentration en oxygène est inférieure à 100 ppmv, et préférentiellement inférieure à 10 ppmv, et un flux de particules au moins partiellement ré-oxydées 26.

Par flux de particules partiellement réo-oxydées, on entend un flux de particules dont la proportion de masse active présente sous la forme oxydée est inférieure à celle contenue dans le flux de particules oxydées lors de la deuxième étape d'oxydation complète. En d'autres termes, la masse d'oxygène transportée par le flux de particules partiellement ré-oxydées est inférieure à celle transportée par le flux de particules totalement ré-oxydées lors de la deuxième étape. La différence de masse d'oxygène transporté entre ces deux flux dépend de la quantité d'air appauvri recyclé 21b et de la pureté d'azote visé dans l'effluent gazeux 28.

La première étape d'oxydation dans la première zone réactionnelle 201 permet donc de produire le flux de diazote de haute pureté.

Ce flux 28 a été défini plus haut. Il comporte une quantité inférieure ou égale à 100 ppmv de dioxygène, de préférence une quantité inférieure ou égale à 10 ppmv.

Dans le cadre du CLC, du CO₂ peut éventuellement être présent dans l'effluent en sortie du réacteur air, lié à l'introduction dans ce réacteur d'imbrulés en provenance du réacteur fuel, qui accompagnent le lit circulant, principalement dans le cas où l'on effectue la combustion de charges hydrocarbonées solides ou liquides. Cependant, dans ce cas, on peut contrôler la teneur en CO₂ à l'aide d'équipements spécifiques tels que les dispositifs de séparation de particules décrits dans les demandes de brevet WO2011/151535 et WO2011/151537.

### Etape (c) : deuxième étape d'oxydation

Le flux de particules 26 est transféré vers la deuxième zone d'oxydation 200 pour une mise en contact avec un flux d'air 20 destiné à la ré-oxydation complète des particules de la masse active oxydo-réductrice. La mise en contact des particules et de l'air est réalisée à co-courant.

L'air envoyé dans cette première zone d"oxydation 200, aussi appelé classiquement air frais, est composé approximativement de 21% de dioxygène et 78% de diazote. Le complément d'environ 1 % est composé majoritairement d'argon mais également d'autres gaz rares comme le néon, le krypton et le xénon, ainsi que de dioxyde de carbone à hauteur d'environ 0,04 %.

Il résulte de cette deuxième étape d'oxydation un flux de particules de porteur d'oxygène dans un état maximal et souhaité d'oxydation 24 et un flux d'air appauvri 21. L'oxydation est réalisées dans des conditions de sur-stoechiométrie en air, de manière à assurer que les particules de porteur d'oxygène soient dans leur état maximal d'oxydation à l'issue de cette deuxième étape d'oxydation.

Par particules de masse active ré-oxydées, on entend les particules dans leur état maximal d'oxydation, sous leur forme MₓO_{y} selon les équations (1) et (2). Par exemple, dans le cas du couple oxydo-réducteur Fe₂O₃/FeO, l'état maximal d'oxydation signifie que l'oxyde de fer est sous la forme Fe₂O₃ sur toutes les particules.

Par air appauvri, on entend un air appauvri en oxygène, comparativement à un air initial (air frais) avant réaction dans la zone d'oxydation. L'air appauvri contient de préférence moins de 4 % de dioxygène. La teneur en dioxygène de l'air appauvri dépend de la quantité de dioxygène contenu initialement dans l'air initial (environ 21% dans le cas de l'air frais), et de la sur-stoechiométrie appliquée pour assurer l'état d'oxydation maximal de toutes les particules....

Typiquement, l'air appauvri comprend environ 2 % de dioxygène. Par environ, on entend à plus ou moins 0.5 % près. Cela résulte du choix d'appliquer une sur-stoechiométrie de l'ordre de 10% pour garantir l'état d'oxydation maximal de l'ensemble des particules. Cette sur-stoechiométrie est nécessaire pour palier aux limitations au transfert entre l'oxygène et les particules et peut varier en fonction de la cinétique de réaction avec le porteur d'oxygène, et de l'hydrodynamique dans le réacteur.

### Etape (d) : division de l'air appauvri

Le flux d'air appauvri 21 est divisé à la sortie de la deuxième zone d'oxydation 200 afin de former une première fraction d'air appauvri 21b recyclée dans la première zone d'oxydation 201 pour réaliser la première étape d'oxydation, et une deuxième fraction complémentaire 21a qui est évacuée de l'unité CLC. La deuxième fraction est non nulle : on n'envisage pas d'envoyer la totalité du flux d'air appauvri issu de la deuxième zone d'oxydation dans la première zone d'oxydation. Le taux de recyclage de l'air appauvri est fonction de la pureté de l'azote souhaitée. A titre d'exemple non limitatif, une recycle de 15 % du flux d'air appauvri, c'est-à-dire une première fraction égale à 15 % de l'air appauvri total 21 contenant initialement 2 % de dioxygène permet de produire un flux 28 contenant de l'ordre de 2 à 3 ppmv de dioxygène.

Avantageusement, on ajuste alors la première fraction d'air appauvri à l'étape (d) à la quantité de masse active oxydo-réductrice réduite obtenue à l'issue de l'étape (a) et envoyée dans la première zone d'oxydation 201, de manière à obtenir un flux de diazote 28 comprenant une fraction de dioxygène donnée.

Par exemple, pour une masse active donnée, de propriétés connues, on détermine le débit de la fraction d'air appauvri 21b, air appauvri dont on connait la teneur en dioxygène, par exemple d'environ 2%, pour oxyder partiellement le flux de particules 25 dont on connait le débit, de manière à produire un flux de diazote comprenant une quantité inférieure ou égale à 100 ppmv de dioxygène, et plus préférentiellement inférieure ou égale à 10 ppmv.

Selon un exemple de réalisation, la masse active oxydo-réductrice comprend un oxyde de manganèse, le flux d'air appauvri comprend environ 2% de dioxygène, et la première fraction d'air appauvri est inférieure à 7,4 % du flux d'air appauvri de manière à produire un flux de diazote comprenant moins de 10 ppmv de dioxygène.

Avant d'être mis en contact avec les particules de porteur d'oxygène, le flux d'air appauvri 21b peut être conditionné pour s'adapter aux conditions opératoires de la zone réactionnelle 201, au moyen d'un dispositif de conditionnement 202. En effet le bon fonctionnement d'une unité CLC dont le transporteur d'oxygène est en lit circulant est généralement assuré par un contrôle précis du bilan pression de l'unité. L'étape de conditionnement peut ainsi typiquement comprendre une mise en pression de la fraction d'air appauvri 21b à l'aide d'un dispositif de mise en pression tel qu'un compresseur, ou même une soufflante, pour produire une fraction d'air appauvri comprimée 27. L'étape de conditionnement peut également comprendre au besoin un échange de chaleur à l'aide d'un dispositif d'échange de chaleur pour s'adapter à la technologie de compresseur choisie. Cette étape de conditionnement est préférée, bien que facultative dans la mesure où l'on peut ajuster le bilan pression de l'unité en modifiant le positionnement relatif des zones réactionnelles.

Le procédé CLC est mis en oeuvre dans une installation qui comprend, en référence à la figure 1 pour la partie réduction de la masse active et à la figure 2 pour la partie oxydation de la masse active :
- au moins une zone de réduction 110 pour réaliser la combustion de la charge 12, comportant une entrée pour le flux de masse active 14, une entrée pour la charge hydrocarbonée 12, une évacuation pour les gaz de combustion 13, essentiellement du CO₂ et de l'H₂O, et pour la masse active oxydo-réductrice réduite 25. Plusieurs zone de réduction peuvent être mises en oeuvre, pour réaliser la combustion de la charge (combustion totale visée).
- une première zone d'oxydation 201 pour réaliser la première étape d'oxydation (b), comportant une entrée reliée à l'évacuation de la masse active oxydo-réductrice réduite 25 issus de la zone de réduction 110, une entrée pour la première fraction d'air appauvri 21b, une sortie pour le flux de diazote 28 et une évacuation pour le flux de masse active oxydo-réductrice partiellement ré-oxydée 26.
- une deuxième zone d'oxydation 200 pour réaliser la deuxième étape d'oxydation (c), comportant une entrée reliée à l'évacuation du flux de masse active oxydo-réductrice partiellement ré-oxydée 26 de la première zone d'oxydation 201, une entrée pour un flux d'air 20, une sortie pour le flux d'air appauvri 21 et une évacuation d'un flux de masse active oxydo-réductrice ré-oxydée 24 connectée la zone de réduction 110.
- des moyens de division du flux d'air appauvri positionnés à la sortie du flux d'air appauvri 21 de la deuxième zone d'oxydation 200, comportant une première conduite pour envoyer la première fraction d'air appauvri 21b vers l'entrée d'air appauvri de la première zone d'oxydation 201 et une deuxième conduite pour sortir de la boucle chimique une deuxième fraction complémentaire d'air appauvri 21a. Les moyens de division du flux d'air appauvri comprennent de préférence un système de vannes pour ajuster le débit des deux fractions d'air appauvri 21a et 21b. La répartition du flux de gaz 21a et 21b entre les conduites peut se faire par exemple par l'implantation de dispositif de séparation solides gaz dédiés, tels que des cyclones, distincts pour chacune des conduites. En ce cas la modulation du flux vers l'une ou l'autre des conduites se fait à la fois par un contrôle de la section de chacune des conduites et par le contrôle du bilan pression de l'unité. Cette séparation peut aussi se faire en aval des dispositifs de séparation solides gaz par l'adaptation des pertes de charges sur l'une ou l'autre des conduites voire sur les deux, par des dispositifs induisant des pertes de charges telles que des vannes. Typiquement ces vannes sont mécaniques, par exemple de type papillon ou pelle. Le choix du type de vanne tient compte de la température d'opération pour le choix des matériaux (aciers réfractaires, alliages spéciaux, système de refroidissement interne, calorifuge). Ici encore cette répartition peut être modulée par la modulation des diamètres respectifs des conduites. Si le système de conditionnement 202 demande un abaissement de la température du fluide 21b, on placera de préférence le dispositif de modulation de pression sur le fluide refroidi. De le même façon si un dispositif de modulation de la perte de charge est prévu sur la conduite du flux 21a, on le place de préférence en aval des éléments de récupération de chaleur qui y sont éventuellement implantés.

Les zones de réduction et d'oxydation comportent chacune des moyens de fluidisation pour assurer le fonctionnement en lit fluidisé circulant de la boucle chimique.

Ces moyens de fluidisation sont par exemple des dispositifs d'injection de gaz de type couronne d'injection ou tout autre dispositif approprié (plaque perforée, plateau à calottes, buses d'injection, diffuseurs etc.), bien connus de l'homme du métier.

Il est entendu que l'installation CLC peut comporter divers dispositifs non représentés, parmi lesquels on peut citer, sans être exhaustif, des dispositifs de contrôle du flux de solide, tels que des vannes, des dispositifs de séparation gaz/solide, des dispositifs d'échange de chaleur, des dispositifs d'élutriation, ou des éléments d'étanchéité tels que des siphons.

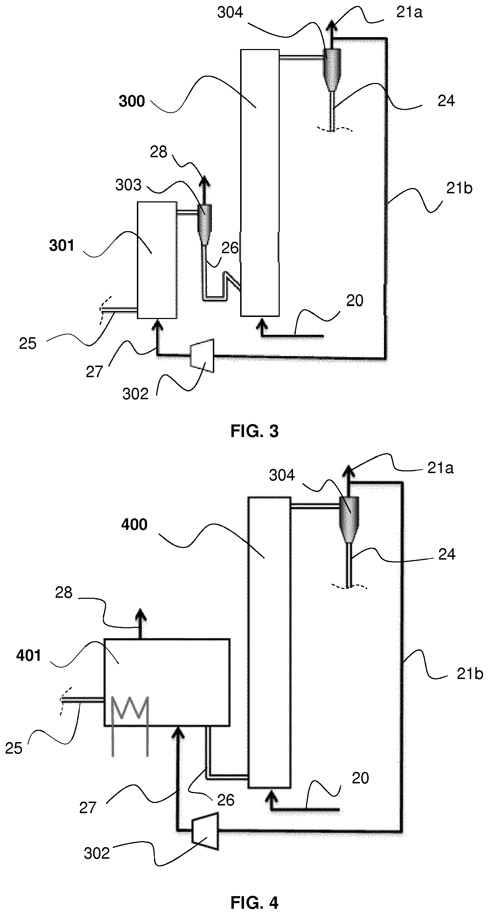

Les figures 3 et 4 illustrent chacune un exemple de mise en oeuvre du procédé CLC selon l'invention. Ces exemples ne sont pas limitatifs et de nombreuses autres configurations peuvent être envisagées. Seule une partie de l'installation CLC, relative à l'oxydation de la masse active et a production du flux de diazote est représentée.

En référence à la figure 3, l'installation CLC comprend deux réacteurs d'oxydation 301 et 300 de type riser, tel que communément nommé dans la terminologie anglo-saxonne, formant respectivement la première zone d'oxydation où est formé le flux de diazote de haute pureté 28 et la deuxième zone d'oxydation où la masse active est totalement ré-oxydée. Un réacteur de type riser est un réacteur sensiblement allongé et vertical opérant en lit fluidisé transporté. Un séparateur gaz/solide 303, tel qu'un cyclone, est positionné en aval du premier réacteur d'oxydation 301, afin de recevoir le mélange sortant au sommet du réacteur 301, qui comprend le flux de diazote 28 et le flux de masse active oxydo-réductrice partiellement ré-oxydée 26. Un siphon est positionné sur une ligne de transport du flux de masse active partiellement ré-oxydée 26 depuis ledit séparateur 303 vers le deuxième réacteur d'oxydation 300, pour assurer l'étanchéité au gaz entre les deux réacteurs air 301 et 300. Un séparateur gaz/solide 304, tel qu'un cyclone, est positionné en aval du deuxième réacteur d'oxydation 300, afin de recevoir le mélange sortant au sommet du réacteur 300, qui comprend l'air appauvri (21a et 21b) et le flux de masse active oxydo-réductrice ré-oxydée 24. A la sortie du cyclone 304, deux conduites sont prévues pour diviser le flux d'air appauvri. Une première conduite achemine une première fraction de l'air appauvri 21b vers le premier réacteur air 301. Une deuxième conduite extrait de l'unité CLC la deuxième fraction d'air appauvri complémentaire 21a. Un dispositif de compression 302, tel qu'un compresseur ou une soufflante, peut être présent sur la conduite amenant la fraction d'air appauvri 21b vers l'entrée d'air appauvri du réacteur air 301.

La fraction de l'air appauvri 21a est extraite à la sortie du deuxième réacteur air 300 pour être recyclée en amont du réacteur 300 dans le premier réacteur air 301. Dans ce premier réacteur 301, celle-ci est mise en contact avec le porteur d'oxygène réduit 25. La fraction d'air appauvri 21a est remontée en pression avant son introduction, sous la forme du flux 27, dans le réacteur 301, afin de compenser, principalement, les pertes de charges des lits fluidisés dans les zones réactionnelles 300 et 301, ainsi que celles générées par les dispositifs d'injection respectifs de ces deux zones. Cette remontée en pression peut être effectuée au moyen d'un compresseur 302 ou même d'une soufflante, dans la mesure où dans la plupart des cas la perte de charge à compenser est inférieure à 1 bar.

Selon ce mode de réalisation, le premier réacteur air 301 comprend un lit fluidisé transporté dans lequel la phase gaz a une vitesse comprise entre 2 m/s et 15 m/s, et préférentiellement comprise entre 2 et 10 m/s. A titre d'exemple, un tel réacteur peut avoir un diamètre compris entre 3 m et 6 m pour une hauteur comprise entre 10 m et 30 m. Le gaz produit 28 est ensuite séparé du flux de solide 26 dans le séparateur gaz/solide 303. L'étanchéité des gaz entre les réacteurs 301 et 300 est par exemple assurée par le siphon fluidisé à l'azote (provenant du flux d'azote produit dans le réacteur 301). L'étanchéité est en effet requise pour maintenir la spécification sur la teneur en dioxygène dans le flux de diazote 28.

Dans le deuxième réacteur air 300, le flux de porteur d'oxygène achève sa ré-oxydation pour produire un flux de porteur d'oxygène ré-oxydé 24, destiné à être à nouveau utilisé à l'étape de réduction pour la combustion de la charge hydrocarbonée. La vitesse de gaz dans le deuxième réacteur air 300 est typiquement comprise entre 3 m/s et 10 m/s. Le mélange comprenant l'air appauvri et le flux de particules ré-oxydées sort au somment du réacteur 301 et entre dans le séparateur gaz/solide 304. Le flux d'air appauvri sortant du cyclone 304 est alors divisé en une première fraction 21b et une deuxième fraction complémentaire 21a sortant de la boucle chimique.

Selon un autre mode de réalisation, la première zone d'oxydation est implantée dans une capacité dédié à une autre fonction que l'oxydation de la masse active.

Ainsi, en référence à la figure 4, l'installation CLC comprend un premier réacteur 401 comportant une enceinte munie de moyens d'échange de chaleur et de moyens de fluidisation, pour opérer en lit fluidisé, et un deuxième réacteur air 400 de type riser.

Les moyens d'échange de chaleur comportent un fluide caloporteur et une surface d'échange de chaleur. Cette surface permet l'échange de chaleur entre les particules de masse active et le fluide caloporteur qui sont séparées par cette surface.

Les moyens de fluidisation comportent des moyens d'injection de l'air appauvri pour former un lit fluidisé de particules, en contact avec la surface d'échange de chaleur.

L'enceinte du réacteur 401 comporte une évacuation pour le flux de diazote 28 située dans une partie supérieure de l'enceinte, et une sortie pour le flux de masse active oxydo-réductrice partiellement ré-oxydée 26 située dans une partie inférieure de l'enceinte et connectée à l'entrée du flux de particules du deuxième réacteur air 400.

Le premier réacteur 401 permet ainsi, selon ce mode de réalisation, d'extraire une fraction de la chaleur produite par la combustion. L'échange de chaleur est avantageusement effectué en aval (en référence ici à la circulation du solide porteur d'oxygène) de la zone de réduction, i.e. en aval de la zone réactionnelle généralement endothermique.

Les conditions opératoires sont de préférence fixées de manière à ce que l'air appauvri ait une vitesse superficielle comprise entre 2 et 10 fois la vitesse terminale de chute des particules de porteur d'oxygène. A titre illustratif, cela correspond à un échangeur de chaleur (enceinte 401) de section rectangulaire de 10 m par 20 m, avec une production d'azote à 10 ppmv de dioxygène comprise entre 13 et 80 tonnes/h dans un réacteur 401 opéré à 900 °C. Les particules de masse active, après réaction dans le premier réacteur 401, sont alors déchargées dans le deuxième réacteur air 400, par exemple au moyen d'une vanne pneumatique de type vanne en L. L'étanchéité est de préférence assurée par le bilan pression qui entraîne la descente de la phase gaz du premier réacteur 401 vers le deuxième réacteur air 400.

Les réactions dans les réacteurs air 401 et 400 sont identiques à celles décrites en référence aux figure 2 et 3. De même le circuit des flux sortant du deuxième réacteur air 400 est identique à celui décrit pour la figure 3 et n'est pas repris ici.

### Applications

Une des applications pour laquelle il est intéressant de mettre en oeuvre la présente invention est la récupération assistée des hydrocarbures (EOR ou EGR), où de l'azote peut être employé pour remettre en pression un réservoir d'hydrocarbures liquides ou gazeux de façon à en augmenter le taux de récupération. L'un des gaz couramment utilisé pour cette application est le CO₂ et présente des avantages par rapport à l'utilisation de l'azote dans le cas de l'EOR principalement en termes de viscosité et de miscibilité dans les hydrocarbures. Toutefois, un EOR à l'azote, aussi désigné sous le terme N₂-EOR, peut présenter des avantages particuliers tel que l'absence de problème de corrosion, habituellement rencontré avec l'utilisation de CO₂ en conditions humides et dans les installations anciennes. L'utilisation de l'azote ne nécessite alors ni la mise en oeuvre de métallurgie particulière, ni l'injection de réactifs anticorrosion, ni le remplacement des pièces corrodées sur les équipements existants.

Un autre élément critique dans les techniques de récupération assistée des hydrocarbures est la pression du réservoir. Dans les cas où le réservoir est à basse pression, la miscibilité du CO₂ dans les hydrocarbures à extraire n'est pas suffisante pour en réduire la viscosité. Le paramètre contrôlant la sortie de l'hydrocarbure du réservoir est alors uniquement la pression que l'on va appliquer, fonction que peut remplir l'azote aussi bien que le CO₂.

Enfin un autre paramètre déterminant dans le choix du gaz employé pour la récupération assistée des hydrocarbures est sa disponibilité. Les endroits où l'EOR au CO₂ est le plus employé pour la production pétrolière sont les endroits comportant d'importants réservoir naturels de CO₂. Lorsque cette ressource n'est pas disponible, et que la configuration du réservoir le permet (par exemple pression basse du réservoir), il peut être intéressant d'envisager un N₂-EOR.

Actuellement, il existe des exemples de mise en oeuvre de N₂-EOR où la production d'un flux de diazote comportant moins de moins de 10 ppmv d'O₂ est réalisée par distillation cryogénique. Cette faible concentration d'O₂ est requise afin notamment de limiter les réactions avec les lubrifiants des équipements de compression, d'éviter l'oxydation des hydrocarbures du réservoir, et d'éviter les réactions parasites pouvant conduire à des sous-produits ou précipités non désirés. Par ailleurs, étant donné qu'une partie du gaz injecté ressort avec les hydrocarbures produits, la limitation de la teneur en dioxygène est souhaitable afin de ne pas induire des problèmes de sécurité (explosion, inflammation des produits). La présente invention permet donc de fournir un flux de diazote de haute pureté pouvant être utilisé pour le N₂-EOR, en tant qu'alternative à la production d'azote par distillation cryogénique.

Un autre exemple d'application pour la présente invention est la fourniture d'utilité azote en raffinerie d'hydrocarbures. En effet, dans les raffineries d'hydrocarbures, typiquement les raffineries de pétrole, il est largement fait usage au diazote. A titre d'exemple une petite raffinerie ayant une production de 40 000 barils par jour (« bpd » pour barrel per day en anglais) a une consommation d'azote de 2,5 t/h soit 2 150 Nm³/h. Cet azote a une pureté minimale de 99.9%. Le tableau 1 ci-dessous détaille les spécifications attendues pour ce gaz.

**Tableau 1**

| **Composant** | **Spécification** |
|---|---|
| N₂ | 99,9% poids/poids min. |
| O₂ | 10 ppmv max. |
| CO₂ | 10 ppmv max. |
| CO | 10 ppmv max. |
| Autres composés carbonés | 5 ppmv max. |
| Cl₂ | 1 ppmv max. |
| H₂O | 5 ppmv max. |
| H₂ | 20 ppmv max. |

Dans les raffineries, le diazote est notamment utilisé pour inerter divers équipements des procédés de raffinage, pour inerter divers équipements de stockage ou de transport des produits sur le site. Le but de cet inertage est en particulier d'éviter la constitution d'atmosphères dangereuse ou explosives et l'oxydation des produits. Le diazote est aussi utilisé dans le traitement de l'eau pour stripper les composés organiques volatiles (COV) des eaux de production.

### Exemple

L'exemple ci-dessous vise à illustrer certains des avantages de la présente invention.

On considère une centrale thermique CLC d'une puissance nominale de 1 000 MWth. La charge hydrocarbonée est dans cet exemple un charbon sud-africain dont la composition typique est indiquée dans le tableau 2 ci-dessous.

**Tableau 2**

| **Element** | **Content (%)** |
|---|---|
| Ash | 15.1 |
| C | 70.7 |
| H | 4.3 |
| O | 7.7 |
| N | 1.3 |
| S | 0.9 |

L'unité CLC comprend deux réacteurs air pour effectuer l'oxydation de la masse active oxydo-réductrice, tel que décrit en relation avec la figure 2.

Le débit d'air nécessaire à la combustion totale de cette charge est de 290 Nm³/s en considérant une sur-stoechiométrie de 10%.

L'air est composé de façon simplifié de 21% d'oxygène et de 79% d'azote.

Ce débit d'air alimente le deuxième réacteur air 200 pour oxyder le porteur d'oxygène. Le flux d'air appauvri issu du deuxième réacteur air contient 2 % d'O₂. La fraction d'air appauvri qui est recyclée et mise en contact avec les particules de porteur d'oxygène dans le premier réacteur air 201 réduit dépend de la pureté requise pour le flux de diazote, ainsi que de la nature du transporteur d'oxygène utilisé.

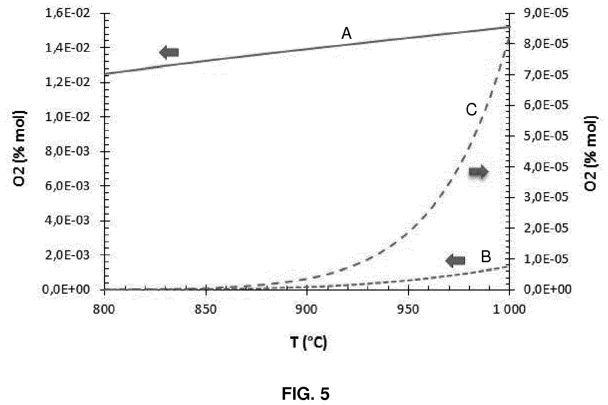

Différents types de transporteur d'oxygène peuvent être utilisés. En particulier des oxydes de métaux de transition seuls ou en mélange comme ceux, entre autres, du nickel, du cobalt, du cuivre, du fer ou du manganèse. Les performances de ces transporteurs d'oxygène sont mesurées en fonction de leur capacité à transporter l'oxygène mais aussi en fonction de leur stabilité vis-à-vis d'une pression partielle réduite en oxygène. Dans cet exemple, on considère l'utilisation d'un transporteur d'oxygène à base de manganèse (oxydes mis en jeu : MnO₂, MnO, Mn₂O₃, Mn₃O₄. La figure 5 représente l'équilibre thermodynamique réactif d'un oxyde de manganèse partiellement réduit en présence d'un air appauvri pour trois ratios de flux massiques de masse active sur le flux massique de gaz traité (flux de gaz entrant dans le premier réacteur air 201 contenant 2% d'oxygène).

Sur la figure 5, la courbe A en trait plein représente cet équilibre pour un ratio r égal à flux de masse active sur flux d'O₂ de l'air entrant de 1,8 t/kg, la courbe B en petits pointillés représente cet équilibre pour un ratio de 6 t/kg, et la courbe C en pointillés représente cet équilibre pour un ratio de 9 t/kg. En abscisse est indiqué la température (en °C) et en ordonnée la concentration en O₂ du gaz traité (en % molaire). La flèche à côté de chaque courbe indique où doivent se lire les valeurs en ordonnée. Les valeurs des courbes A et B se lisent sur l'axe des ordonnées à gauche du graphique, et les valeurs pour la courbe C se lisent sur l'ordonnée à droite du graphique.

Dans cet exemple, le deuxième réacteur air 200 est opéré à 900 °C. La concentration résultante de l'air appauvri en O₂ de 2 % est obtenue à partir d'air frais pour un ratio de 10,7 kg de masse active par kg d'air injecté.

Dans le premier réacteur, la concentration de 2% d'oxygène dans le gaz à traiter correspond à un ratio de 0,6 tonnes de masse active par kg d'oxygène injecté.

La figure 5 montre qu'en multipliant la valeur de ce ratio par un facteur 3, correspondant à la courbe A (ratio *r* de 1,8 t/kg), la concentration résiduelle d'O₂ tombe à 1,4 %.

Cette même concentration tombe à 174 ppmv en multipliant la valeur de ce ratio par 10 (cas de la courbe B avec un ratio r de 6 t/kg), et à 2,6 ppmv en multipliant la valeur de ce ratio par 15 (cas de la courbe C avec un ratio r de 9 ton/kg).

Dans le cas où l'on souhaiterait assurer une concentration inférieure à 10 ppmv un ratio d'au minimum de 8,1 tonnes de masse active par kg d'oxygène doit être appliqué, ce qui revient à opérer le premier réacteur air 201 avec une fraction du débit d'air appauvri sortant du réacteur air à 2 % d'O₂ égale 1/13,5, soit 7,4 % du débit d'air appauvri 21.

Selon cet exemple, le débit d'air de 290 Nm³/s utilisé pour la combustion totale dans le second réacteur produit de l'air appauvri à 2% d'oxygène correspondant à un débit d'azote de 1000 t/h. En traitant 7,4 % de cet air appauvri dans le premier réacteur, on peut ainsi produire 74 t/h d'azote à 10 ppmv d'O₂ avec une unité CLC de 1000 MWth.

Selon l'invention, il est avantageux d'utiliser de l'air appauvri dans le premier réacteur air plutôt que de l'air frais pour produire un flux de diazote de haute pureté.

Un premier avantage est qu'on peut ainsi réduire la taille du premier réacteur air produisant le flux de diazote, car environ 90 % de l'oxygène de l'air a déjà été consommé dans le second réacteur air.

Un autre avantage à utiliser de l'air appauvri est qu'il est ainsi possible de produire plus d'azote comparativement à la production qu'on obtiendrait avec de l'air frais. En effet, la concentration d'oxygène en sortie du réacteur est gouverné par l'équilibre thermodynamique entre l'oxygène de l'air et la concentration d'oxygène dans les particules de masse active. Dans le cas d'une injection d'air frais, plus d'oxygène doit être consommé par la masse active pour atteindre la spécification recherchée (10 ppmv d'O₂). En reprenant les données du présent exemple, un ratio de 10,7 kg de masse active par kg d'air injecté est requis dans le second réacteur pour réaliser la combustion totale de la charge. Pour un débit d'air de 290 Nm³/s, le débit de masse active est par conséquent de 3,9 t/s. Dans le premier réacteur, un ratio minimum de 8,1 tonnes de masse active par kg d'oxygène est requis pour atteindre la spécification de 10 ppmv de dioxygène, .Donc pour un débit de masse active de 3,9 t/s, le débit maximum d'oxygène pouvant être purifier dans le premier réacteur est de 0,48 kg/s.

En utilisant de l'air appauvri, ce débit d'oxygène correspond à 2 % molaire du débit total, le complément étant de l'azote. La production d'azote à 10 ppm d'O₂ s'élève dans ce cas à 74 t/h.

En utilisant de l'air frais, ce même débit d'oxygène correspondrait à 21 % molaire du débit total, le complément étant de l'azote. Il faudrait donc réduire le débit total comparativement au cas précédent pour atteindre la spécification, ce qui limiterait la production d'azote à 10 ppm d'O₂ à 5,7 t/h.

Ainsi, pour une même quantité de masse active mise en oeuvre, la production d'azote peut être multipliée par un facteur 13, dans les conditions de l'exemple, en préférant l'utilisation de l'air appauvri à celle de l'air frais.

## Revendications

1. Procédé de combustion d'une charge hydrocarbonée par oxydo-réduction en boucle chimique dans laquelle circule une masse active oxydo-réductrice sous forme de particules entre au moins une zone de réduction et deux zones d'oxydation opérant en lit fluidisé, dans lequel :
(a) on réalise la combustion de ladite charge hydrocarbonée par réduction de la masse active oxydo-réductrice mise en contact avec ladite charge dans au moins une zone de réduction ;
(b) on réalise, dans une première zone d'oxydation (201,301,401), une première étape d'oxydation de la masse active oxydo-réductrice réduite (25) obtenue à l'issue de l'étape (a) par mise en contact avec une première fraction d'un flux d'air appauvri en oxygène (21b), pour produire un flux de diazote (28) comprenant une quantité inférieure ou égale à 100 ppmv de dioxygène et un flux de masse active oxydo-réductrice partiellement ré-oxydée (26) ;
(c) on réalise, dans une deuxième zone d'oxydation (200,300,400), une deuxième étape d'oxydation du flux de masse active oxydo-réductrice partiellement ré-oxydée (26) obtenu à l'issue de l'étape (b), par mise en contact avec de l'air (20) pour produire un flux d'air appauvri en oxygène (21) et un flux de masse active oxydo-réductrice ré-oxydée (24) destiné à être utilisé à l'étape (a).
(d) on divise ledit flux d'air appauvri en oxygène (21) obtenu à l'issue de l'étape (c) pour former la première fraction du flux d'air appauvri en oxygène (21b) utilisée à l'étape (b) et une deuxième fraction complémentaire du flux d'air appauvri en oxygène (21a) extrait de la boucle chimique.

2. Procédé selon la revendication 1, dans lequel on ajuste la première fraction du flux d'air appauvri en oxygène (21b) à l'étape (d) à la quantité de masse active oxydo-réductrice réduite (25) obtenue à l'issue de l'étape (a) et envoyée dans la première zone d'oxydation (201,301,401) de manière à obtenir le flux de diazote (28) comprenant une fraction de dioxygène donnée.

3. Procédé selon l'une quelconque des revendications précédentes, dans lequel le flux de diazote (28) contient une quantité inférieure ou égale à 10 ppmv de dioxygène.

4. Procédé selon l'une quelconque des revendications précédentes, dans lequel une sur-stoechiométrie en oxygène est appliquée lors de la deuxième étape d'oxydation (c), de manière à obtenir un flux d'air appauvri en oxygène (21) comprenant environ 2% de dioxygène.

5. Procédé selon l'une quelconque des revendications précédentes, dans lequel la masse active oxydo-réductrice comprend un oxyde de manganèse, le flux d'air appauvri en oxygène (21) comprend environ 2% de dioxygène, et la première fraction du flux d'air appauvri en oxygène (21b) est inférieure à 7,4 % du flux d'air appauvri en oxygène (21) de manière à produire le flux de diazote (28) comprenant moins de 10 ppmv de dioxygène.

6. Procédé selon l'une quelconque des revendications précédentes, dans lequel la première zone d'oxydation (401) est un réacteur comportant une enceinte munie de moyens d'échange de chaleur, lesdits moyens d'échange de chaleur comprenant un fluide caloporteur, et dans lequel, au cours de la première étape d'oxydation (b) :
- on crée un lit fluidisé de particules de masse active oxydo-réductrice au moyen de l'injection de la première fraction du flux d'air appauvri en oxygène (21b) dans ladite enceinte,
- on effectue un échange de chaleur entre le lit fluidisé de particules et le fluide caloporteur ;
- on évacue ledit flux de diazote (28) par une première sortie située dans une partie supérieure de l'enceinte, et
- on évacue le flux de masse active oxydo-réductrice partiellement ré-oxydée (26) par une deuxième sortie située dans une partie inférieure de l'enceinte pour l'envoyer dans la deuxième zone de réaction (400), de préférence au moyen d'une vanne pneumatique.

7. Procédé selon la revendication 6, dans lequel on opère la première zone d'oxydation (401) de manière à ce que la vitesse superficielle de l'air appauvri en oxygène dans l'enceinte soit comprise entre 2 fois et 10 fois la vitesse terminale de chute des particules de la masse active oxydo-réductrice.

8. Procédé selon l'une des revendications 1 à 5, dans lequel les première et deuxième étapes d'oxydation (b) et (c) sont réalisées respectivement dans un premier réacteur d'oxydation (301) et un deuxième réacteur d'oxydation (300) tous deux de type riser, et dans lequel :
- à l'étape (b) on opère ledit premier réacteur d'oxydation (301) de manière à ce que la vitesse superficielle de l'air appauvri en oxygène dans ledit premier réacteur soit comprise entre 2 et 15 m/s ;
- on sépare d'un mélange sortant au sommet du premier réacteur d'oxydation (301) le flux de diazote (28) et le flux de masse active oxydo-réductrice (26) dans un séparateur gaz/solide tel qu'un cyclone (303) ;
- on envoie ledit flux de masse active partiellement ré-oxydée (26) vers ledit deuxième réacteur (300) au moyen d'une ligne de transport comprenant un siphon pour assurer l'étanchéité au gaz entre lesdits premier et deuxième réacteur (301,300) ; et
- à l'étape (c) on opère ledit deuxième réacteur d'oxydation (300) de manière à ce que la vitesse superficielle de l'air dans ledit deuxième réacteur soit comprise entre 3 et 10 m/s.

9. Procédé selon l'une quelconque des revendications précédentes, dans lequel on élève la pression de la première fraction du flux d'air appauvri en oxygène (21b) avant son entrée dans la première zone d'oxydation (301).

10. Procédé selon l'une quelconque des revendications précédentes, dans lequel la mise en contact des particules de la masse active oxydo-réductrice réduite (25) et de la première fraction du flux d'air appauvri en oxygène (21b) dans la première zone d'oxydation (201,301,401), et la mise en contact du flux de particules de la masse active oxydo-réductrice partiellement oxydées (26) et de l'air (20) dans la deuxième zone d'oxydation (200,300,400), se font à co-courant.

11. Installation pour réaliser la combustion d'une charge hydrocarbonée selon l'une des revendications 1 à 10, comprenant :
- au moins une zone de réduction pour réaliser l'étape (a) de combustion, comportant une entrée pour un flux de masse active oxydo-réductrice sous forme de particules, une entrée pour ladite charge hydrocarbonée, une évacuation pour un flux gazeux et pour la masse active oxydo-réductrice réduite;
- une première zone d'oxydation (201,301,401) pour réaliser la première étape d'oxydation (b), comportant une entrée reliée à l'évacuation de la masse active oxydo-réductrice réduite (25) issue de la zone de réduction, une entrée pour la première fraction du flux d'air appauvri en oxygène (21b), une sortie pour le flux de diazote (28) et une évacuation pour le flux de masse active oxydo-réductrice partiellement ré-oxydée (26) ;
- une deuxième zone d'oxydation (200,300,400) pour réaliser la deuxième étape d'oxydation (c), comportant une entrée reliée à l'évacuation du flux de masse active oxydo-réductrice partiellement ré-oxydée (26) de la première zone d'oxydation (201,301,401), une entrée pour un flux d'air (20), une sortie pour le flux d'air appauvri en oxygène (21) et une évacuation d'un flux de masse active oxydo-réductrice ré-oxydée (24) connectée la zone de réduction ;
- des moyens de division du flux d'air appauvri en oxygène (21) positionnés à la sortie du flux d'air appauvri en oxygène de la deuxième zone d'oxydation (200,300,400), comportant une première conduite pour envoyer la première fraction du flux d'air appauvri en oxygène (21b) vers l'entrée d'air appauvri en oxygène de la première zone d'oxydation (201,301,401) et une deuxième conduite pour sortir de la boucle chimique une deuxième fraction complémentaire du flux d'air appauvri en oxygène (21a) ;
lesdites zones de réduction et d'oxydation comportant chacune des moyens de fluidisation.

12. Installation selon la revendication 11, comprenant des moyens pour ajuster la première fraction du flux d'air appauvri en oxygène (21b) à la quantité de masse active oxydo-réductrice réduite (25) introduite dans la première zone d'oxydation (201,301,401) de manière à obtenir le flux de diazote (28) comprenant une quantité de dioxygène donnée, de préférence une quantité de dioxygène inférieure ou égale à 10 ppmv.

13. Installation selon l'une quelconque des revendications 11 et 12, dans laquelle :
- la première zone d'oxydation (401) est un réacteur comportant une enceinte munie des moyens d'échange de chaleur et des moyens de fluidisation, lesdits moyens d'échange de chaleur comportant un fluide caloporteur et une surface d'échange de chaleur en contact avec ledit fluide caloporteur et ladite masse active oxydo-réductrice et séparant ledit fluide caloporteur de ladite masse active oxydo-réductrice, lesdits moyens de fluidisation comportant des moyens d'injection de l'air appauvri en oxygène pour former un lit fluidisé de particules, ledit lit fluidisé étant en contact avec la surface d'échange de chaleur,
- l'évacuation pour le flux de diazote (28) est située dans une partie supérieure de l'enceinte, et
- la sortie pour le flux de masse active oxydo-réductrice partiellement ré-oxydée est située dans une partie inférieure de l'enceinte connectée à l'entrée du flux de masse active oxydo-réductrice partiellement ré-oxydée (26) de la deuxième zone de réaction (400).

14. Installation selon l'une quelconque des revendications 11 et 12, comprenant :
- un premier réacteur d'oxydation de type riser (301) en tant que première zone d'oxydation ;
- un deuxième réacteur d'oxydation de type riser (300) en tant que deuxième zone d'oxydation ;
- un séparateur gaz/solide (303), tel qu'un cyclone, positionné en aval dudit premier réacteur d'oxydation (301) de manière à recevoir un mélange sortant au sommet dudit premier réacteur d'oxydation (301), ledit mélange comprenant le flux de diazote (28) et le flux de masse active oxydo-réductrice partiellement ré-oxydée (26) ;
- un siphon positionné sur une ligne de transport du flux de masse active partiellement ré-oxydée (26) depuis ledit séparateur (303) vers le deuxième réacteur d'oxydation (300), pour assurer l'étanchéité au gaz entre lesdits premier et deuxième réacteurs d'oxydation (301,300).

15. Installation selon l'une quelconque des revendications 11 à 14, comprenant un dispositif de compression (202,302), tel qu'un compresseur ou un soufflante, positionné sur la première conduite envoyant la première fraction du flux d'air appauvri en oxygène (21b) vers la première zone d'oxydation (201,301,401).

## Patentansprüche

1. Verfahren zur Verbrennung einer Kohlenwasserstoffcharge durch Oxidations-Reduktion im Chemical Looping, in der eine aktive Oxidations-Reduktions-Masse in Form von Partikeln zwischen mindestens einer Reduktionszone und zwei Oxidationszonen, die im Fließbett arbeiten, zirkuliert, bei dem:
(a) eine Verbrennung der Kohlenwasserstoffcharge durch Reduktion der aktiven Oxidations-Reduktions-Masse, die mit der Charge in mindestens einer Reduktionszone in Kontakt gebracht wird, durchgeführt wird;
(b) in einer ersten Oxidationszone (201, 301, 401) ein erster Oxidationsschritt der reduzierten aktiven Oxidations-Reduktions-Masse (25), die nach dem Schritt (a) erhalten wird, durch Kontaktnahme mit einer ersten Fraktion eines an Sauerstoff armen Luftstroms (21b) durchgeführt wird, um einen molekularen Stickstoffstrom (28), umfassend eine Menge kleiner oder gleich 100 ppmv an molekularem Sauerstoff, und einen teilweise reoxidierten aktiven Oxidations-Reduktions-Massenstrom (26) zu erzeugen;
(c) in einer zweiten Oxidationszone (200, 300, 400) ein zweiter Oxidationsschritt der teilweise reoxidierten aktiven Oxidations-Reduktions-Masse (26), die nach dem Schritt (b) erhalten wird, durch Kontaktnahme mit Luft (20) durchgeführt wird, um einen an Sauerstoff armen Luftstrom (21) und einen reoxidierten aktiven Oxidations-Reduktions-Massenstrom (24) zu erzeugen, der dazu bestimmt ist, in Schritt (a) verwendet zu werden,
(d) der an Sauerstoff arme Luftstrom (21), der nach Schritt (c) erhalten wird, geteilt wird, um die erste Fraktion des an Sauerstoff armen Luftstroms (21b), der in Schritt (b) verwendet wird, und eine zweite Fraktion zu bilden, die zu dem an Sauerstoff armen Luftstrom (21a), der aus dem Chemical Looping entnommen wird, komplementär ist.

2. Verfahren nach Anspruch 1, bei dem die erste Fraktion des an Sauerstoff armen Luftstroms (21b) in Schritt (d) an die Menge einer reduzierten aktiven Oxidations-Reduktions-Masse (25) angepasst wird, die nach dem Schritt (a) erhalten wird und in die erste Oxidationszone (201, 301, 401) geschickt wird, um einen molekularen Stickstoffstrom (28) zu erhalten, der eine gegebene molekulare Sauerstofffraktion umfasst.

3. Verfahren nach einem der vorhergehenden Ansprüche, bei dem der molekulare Stickstoffstrom (28), eine Menge an molekularem Sauerstoff kleiner oder gleich 10 ppmv enthält.

4. Verfahren nach einem der vorhergehenden Ansprüche, bei dem eine Überstöchiometrie an Sauerstoff beim zweiten Oxidationsschritt (c) angewandt wird, um einen an Sauerstoff armen Luftstrom (21), umfassend ungefähr 2 % molekularem Sauerstoff, zu erhalten.

5. Verfahren nach einem der vorhergehenden Ansprüche, bei dem die aktive Oxidations-Reduktions-Masse ein Manganoxid umfasst, der an Sauerstoff arme Luftstrom (21) ungefähr 2 % molekularen Sauerstoff umfasst, und die erste Fraktion des an Sauerstoff armen Luftstroms (21b) kleiner als 7,4 % des an Sauerstoff armen Luftstroms (21) ist, um einen molekularen Stickstoffstrom (28), umfassend weniger als 10 ppmv molekularen Sauerstoff, zu erzeugen.

6. Verfahren nach einem der vorhergehenden Ansprüche, bei dem die erste Oxidationszone (401) ein Reaktor ist, umfassend ein Gefäß, das mit Wärmeaustauschmitteln versehen ist, wobei die Wärmeaustauschmittel ein Wärmeträgerfluid umfassen, und bei dem während des ersten Oxidationsschritts (b):
- ein Fließbett von Partikeln einer aktiven Oxidations-Reduktions-Masse mit Hilfe des Einspritzens der ersten Fraktion des an Sauerstoff armen Luftstroms (21b) in das Gefäß erzeugt wird,
- ein Wärmeaustausch zwischen dem Partikelfließbett und dem Wärmeträgerfluid durchgeführt wird;
- der molekulare Stickstoffstrom (28) durch einen ersten Ausgang, der sich in einem oberen Teil des Gefäßes befindet, abgeleitet wird, und
- der Strom einer teilweise reoxidierten aktiven Oxidations-Reduktions-Masse (26) durch einen zweiten Ausgang, der sich in einem unteren Teil des Gefäßes befindet, abgeleitet wird, um ihn in die zweite Reaktionszone (400) zu schicken, vorzugsweise mit Hilfe eines Druckluftventils.

7. Verfahren nach Anspruch 6, bei dem die erste Oxidationszone (401) derart betrieben wird, dass die Oberflächengeschwindigkeit der an Sauerstoff armen Luft in dem Gefäß zwischen 2-mal und 10-mal die Endfallgeschwindigkeit der Partikel der aktiven Oxidations-Reduktions-Masse beträgt.

8. Verfahren nach einem der Ansprüche 1 bis 5, bei dem die ersten und zweiten Oxidationsschritte (b) und (c) in einem ersten Oxidationsreaktor (301) bzw. einem zweiten Oxidationsreaktor (300), beide vom Riser-Typ, durchgeführt werden, und bei dem:
- in Schritt (b) der erste Oxidationsreaktor (301) derart betrieben wird, dass die Oberflächengeschwindigkeit der an Sauerstoff armen Luft in dem ersten Reaktor zwischen 2 und 15 m/s beträgt;
- aus einem Gemisch, das am Scheitelpunkt des ersten Oxidationsreaktors (301) austritt, dem molekularen Stickstoffstrom (28) und der Strom einer aktiven Oxidations-Reduktions-Masse (26) einem Gas/Feststoff-Separator, wie einem Zyklon (303), getrennt werden;
- der Strom einer teilweise reoxidierten aktiven Masse (26) zu dem zweiten Reaktor (300) mit Hilfe einer Förderleitung geschickt wird, umfassend einen Siphon, um die Gasdichtigkeit zwischen dem ersten und dem zweiten Reaktor (301, 300) zu gewährleisten; und
- in Schritt (c) der zweite Oxidationsreaktor (300) derart betrieben wird, dass die Oberflächengeschwindigkeit in dem zweiten Reaktor zwischen 3 und 10 m/s beträgt.

9. Verfahren nach einem der vorhergehenden Ansprüche, bei dem der druck der ersten Fraktion des an Sauerstoff armen Luftstroms (21b) vor seinem Eintritt in die erste Oxidationszone (301) erhöht wird.

10. Verfahren nach einem der vorhergehenden Ansprüche, bei dem die Kontaktnahme der Partikel der reduzierten aktiven Oxidations-Reduktions-masse (25) und der ersten Fraktion des an Sauerstoff armen Luftstroms (21b) in der ersten Oxidationszone (201, 301, 401) und die Kontaktnahme des Stroms von teilweise oxidierten Partikeln der aktiven Oxidations-Reduktions-Masse (26) und der Luft (20) in der zweiten Oxidationszone (200, 300, 400) bei Gleichstrom erfolgen.

11. Anlage zur Durchführung der Verbrennung einer Kohlenwasserstoffcharge nach einem der Ansprüche 1 bis 10, umfassend:
- mindestens eine Reduktionszone, um den Verbrennungsschritt (a) durchzuführen, umfassend einen Eingang für einen Strom einer aktiven Oxidations-Reduktions-Masse in Form von Partikeln, einen Eingang für die Kohlenwasserstoffcharge, eine Ableitung für einen Gaststrom und für die reduzierte aktive Oxidations-Reduktions-Masse;
- eine erste Oxidationszone (201, 301, 401), um den ersten Oxidationsschritt (b) durchzuführen, umfassend einen Eingang, der mit der Ableitung der aus der Reduktionszone kommenden reduzierten aktiven Oxidations-Reduktions-Masse (25) verbunden ist, einen Eingang für die erste Fraktion des an Sauerstoff armen Luftstroms (21b), einen Ausgang für den molekularen Stickstoffstrom (28) und eine Ableitung für den Strom einer teilweise reoxidierten aktiven Oxidations-Reduktions-Masse (26);
- eine zweite Oxidationszone (200, 300, 400), um den zweiten Oxidationsschritt (c) durchzuführen, umfassend einen Eingang, der mit der Ableitung des Stroms einer teilweise reoxidierten aktiven Oxidations-Reduktions-Masse (26) aus der ersten Oxidationszone (201, 301, 401) verbunden ist, einen Eingang für einen Luftstrom (20), einen Ausgang für den an Sauerstoff armen Luftstrom (21) und eine Ableitung für einen Strom einer reoxidierten aktiven Oxidations-Reduktions-Masse (24), die an die Reduktionszone angeschlossen ist;
- Teilungsmittel des an Sauerstoff armen Luftstroms (21), die am Ausgang des an Sauerstoff armen Luftstroms der zweiten Oxidationszone (200, 300, 400) angeordnet sind, umfassend eine erste Leitung, um die erste Fraktion des an Sauerstoff armen Luftstroms (21b) zu dem Eingang von an Sauerstoff armer Luft der ersten Oxidationszone (201, 301, 401) zu schicken, und eine zweite Leitung, um aus dem Chemical Looping eine zweite komplementäre Fraktion zu dem an Sauerstoff armen Luftstrom (21a) auszugeben;
wobei die Reduktions- und Oxidationszonen jeweils Fluidisierungsmittel umfassen.

12. Anlage nach Anspruch 11, umfassend Mittel, um die erste Fraktion des an Sauerstoff armen Luftstroms (21b) an die Menge einer reduzierten aktiven Oxidations-Reduktions-Masse (25), die in die erste Oxidationszone (201, 301, 401) eingeleitet wird, anzupassen, um den molekularen Stickstoffstrom (28) zu erhalten, der eine gegebene molekulare Sauerstoffmenge, vorzugsweise eine molekulare Sauerstoffmenge kleiner oder gleich 10 ppmv, umfasst.

13. Anlage nach einem der Ansprüche 11 und 12, bei der:
- die erste Oxidationszone (401) ein Reaktor ist, umfassend ein Gefäß, das mit Wärmeaustauschmitteln und Fluidisierungsmitteln versehen ist, wobei die Wärmeaustauschmittel ein Wärmeträgerfluid und eine Wärmeaustauschfläche umfassen, die mit dem Wärmeträgerfluid und der aktiven Oxidations-Reduktions-Masse in Kontakt sind und das Wärmeträgerfluid von der aktiven Oxidations-Reduktions-Masse trennen, wobei die Fluidisierungsmittel Einspritzmittel der an Sauerstoff armen Luft umfassen, um ein Partikelfließbett zu bilden, wobei das Fließbett mit der Wärmeaustauschfläche in Kontakt ist,
- die Ableitung für den molekularen Stickstoffstrom (28) in einem oberen Teil des Gefäßes angeordnet ist, und
- der Ausgang für den Strom einer teilweise reoxidierten aktiven Oxidations-Reduktions-Masse in einem unteren Teil des Gefäßes angeordnet ist, der an den Eingang des Stroms einer teilweise reoxidierten aktiven Oxidations-Reduktions-Masse (26) der zweiten Reaktionszone (400) angeschlossen ist.

14. Anlage nach einem der Ansprüche 11 und 12, umfassend:
- einen ersten Oxidationsreaktor vom Riser-Typ (301) als erste Oxidationszone;
- einen zweiten Oxidationsreaktor vom Riser-Typ (300) als zweite Oxidationszone;
- einen Gas/Feststoff-Separator (303), wie einen Zyklon, der stromabwärts zum ersten Oxidationsreaktor (301) angeordnet ist, um ein Gemisch aufzunehmen, das am Scheitelpunkt des ersten Oxidationsreaktors (301) austritt, wobei das Gemisch den molekularen Stickstoffstrom (28) und den Strom einer teilweise reoxidierten aktiven Oxidations-Reduktions-Masse (26) umfasst;
- einen Siphon, der auf einer Förderleitung des Stroms einer teilweise reoxidierten aktiven Masse (26) vom Separator (303) zum zweiten Oxidationsreaktor (300) angeordnet ist, um die Gasdichtigkeit zwischen dem ersten und dem zweiten Oxidationsreaktor (301, 300) zu gewährleisten.

15. Anlage nach einem der Ansprüche 11 bis 14, umfassend eine Kompressionsvorrichtung (202, 302), wie einen Kompressor oder ein Gebläse, die auf der ersten Leitung angeordnet ist, die die erste Fraktion des an Sauerstoff armen Luftstroms (21b) zu der ersten Oxidationszone (201, 301, 401) schickt.

## Claims

1. A process for the combustion of a hydrocarbon feed by chemical looping combustion, in which a redox active mass in the form of particles circulates between at least one reduction zone and two oxidation zones operating in fluidized bed mode, in which:
(a) combustion of said hydrocarbon feed is carried out by reduction of the redox active mass brought into contact with the feed in at least one reduction zone;
(b) in a first oxidation zone (201, 301, 401), a first step for oxidation of the reduced redox active mass (25) obtained at the end of step (a) is carried out by being brought into contact with a first fraction of a stream of air depleted in oxygen (21b), in order to produce a stream of dinitrogen (28) comprising a quantity of 100 ppmv or less of dioxygen and a stream of partially re-oxidized redox active mass (26);
(c) in a second oxidation zone (200, 300, 400), a second step for oxidation of the stream of partially re-oxidized redox active mass obtained at the end of step (b) is carried out, by being brought into contact with air (20) in order to produce a stream of air depleted in oxygen (21) and a stream of re-oxidized redox active mass (24) for use in step (a);
(d) said stream of air depleted in oxygen (21) obtained at the end of step (c) is divided in order to form the first fraction of a stream of air depleted in oxygen (21b) used in step (b) and a second fraction which is complementary to the stream of air depleted in oxygen (21a) extracted from the chemical loop.

2. The process as claimed in claim 1, in which the first fraction of the stream of air depleted in oxygen (21b) in step (d) is adjusted to the quantity of reduced redox active mass (25) obtained from step (a) and sent to the first oxidation zone (201, 301, 401) in a manner such as to obtain said stream of dinitrogen (28) comprising a given fraction of dioxygen.

3. The process as claimed in any one of the preceding claims, in which the stream of dinitrogen (28) contains a quantity of 10 ppmv or less of dioxygen.

4. The process as claimed in any one of the preceding claims, in which a super-stoichiometry of oxygen is applied during the second oxidation step (c), in a manner such as to obtain a stream of air depleted in oxygen (21) comprising approximately 2% of dioxygen.

5. The process as claimed in any one of the preceding claims, in which the redox active mass comprises an oxide of manganese, the stream of air depleted in oxygen (21) comprises approximately 2% of dioxygen, and the first fraction of the stream of air depleted in oxygen (21b) is less than 7.4% of the stream of air depleted in oxygen (21), in a manner such as to produce said stream of dinitrogen (28) comprising less than 10 ppmv of dioxygen.

6. The process as claimed in any one of the preceding claims, in which the first oxidation zone (401) is a reactor comprising a vessel provided with heat exchange means, said heat exchange means comprising a heat transfer fluid and in which, during the first oxidation step (b):
- a fluidized bed of particles of redox active mass is generated by means of injecting the first fraction of the stream of air depleted in oxygen (21b) into said vessel,
- an exchange of heat is carried out between the fluidized bed of particles and the heat transfer fluid;
- said stream of dinitrogen (28) is evacuated via a first outlet located in an upper portion of the vessel, and
- the stream of partially re-oxidized redox active mass (26) is evacuated via a second outlet located in a lower portion of the vessel in order to send it to the second reaction zone (400), preferably by means of a pneumatic valve.

7. The process as claimed in claim 6, in which the first oxidation zone (401) is operated in a manner such that the surface velocity of the air depleted in oxygen in the vessel is in the range 2 times to 10 times the terminal falling velocity of the particles of the redox active mass.

8. The process as claimed in one of claims 1 to 5, in which the first and second oxidation steps (b) and (c) are respectively carried out in a first oxidation reactor (301) and a second oxidation reactor (300), both of the riser type, and in which:
- in step (b), said first oxidation reactor (301) is operated in a manner such that the surface velocity of the air depleted in oxygen in said first reactor is in the range 2 to 15 m/s;
- a mixture leaving from the top of the first oxidation reactor (301) is separated into the stream of dinitrogen (28) and the stream of redox active mass (26) in a gas/solid separator such as a cyclone (303);
- the stream of partially re-oxidized active mass (26) is sent to the second reactor (300) by means of a transport line comprising a siphon in order to provide a seal to gas between said first and second reactors (301, 300); and
- in step (c), said second oxidation reactor (300) is operated in a manner such that the surface velocity of the air in said second reactor is in the range 3 to 10 m/s.

9. The process as claimed in any one of the preceding claims, in which the pressure of the first fraction of the stream of air depleted in oxygen (21b) is raised before it enters the first oxidation zone (301).

10. The process as claimed in any one of the preceding claims, in which contact of the particles of the reduced redox active mass (25) and of the first fraction of the stream of air depleted in oxygen (21b) in the first oxidation zone (201, 301, 401) and contact of the stream of particles of the partially oxidized redox active mass (26) and of air (20) in the second oxidation zone (200, 300, 400) is carried out in counter-current mode.

11. An installation for carrying out the combustion of a hydrocarbon feed in accordance with one of claims 1 to 10, comprising:
- at least one reduction zone for carrying out the combustion step (a), comprising an inlet for a stream of redox active mass in the form of particles, an inlet for said hydrocarbon feed, a discharge for a gaseous stream and for the reduced redox active mass;
- a first oxidation zone (201, 301, 401) for carrying out the first oxidation step (b), comprising an inlet connected to the discharge for the reduced redox active mass (25) obtained from the reduction zone, an inlet for the first fraction of the stream of depleted air (21b), an outlet for the stream of dinitrogen (28) and a discharge for the stream of partially re-oxidized redox active mass (26);
- a second oxidation zone (200, 300, 400) for carrying out the second oxidation step (c), comprising an inlet connected to the discharge for the stream of partially re-oxidized redox active mass (26) from the first oxidation zone (201, 301, 401), an inlet for a stream of air (20), an outlet for the stream of air depleted in oxygen (21) and a discharge for a stream of re-oxidized redox active mass (24) connected to the reduction zone;
- means for dividing the stream of air depleted in oxygen (21) positioned at the outlet for the stream of air depleted in oxygen from the second oxidation zone (200, 300, 400), comprising a first conduit for sending the first fraction of the stream of air depleted in oxygen (21b) to the inlet for air depleted in oxygen of the first oxidation zone (201, 301, 401) and a second conduit to remove a second fraction which is complementary to the stream of air depleted in oxygen (21a) from the chemical loop;
said reduction and oxidation zones each comprising fluidization means.

12. The installation as claimed in claim 11, comprising means for adjusting the first fraction of the stream of air depleted in oxygen (21b) to the quantity of reduced redox active mass (25) introduced into the first oxidation zone (201, 301, 401) in a manner such as to obtain said stream of dinitrogen (28) comprising a given quantity of dioxygen, preferably a quantity of dioxygen of 10 ppmv or less.

13. The installation as claimed in claim 11 or claim 12, in which:
- the first oxidation zone (401) is a reactor comprising a vessel provided with heat exchange means and fluidization means, the heat exchange means comprising a heat transfer fluid and a heat exchange surface in contact with the heat transfer fluid and said redox active mass and separating said heat transfer fluid from said redox active mass, said fluidization means comprising means for injecting air depleted in oxygen in order to form a fluidized bed of particles, said fluidized bed being in contact with the heat exchange surface,
- the discharge for the stream of dinitrogen (28) being located in an upper portion of the vessel, and
- the outlet for the stream of partially re-oxidized redox active mass being located in a lower portion of the vessel connected to the inlet for the stream of partially re-oxidized redox active mass (26) from the second reaction zone (400).

14. The installation as claimed in claim 11 or claim 12, comprising:
- a first oxidation reactor (301) of the riser type, as the first oxidation zone;
- a second oxidation reactor of the riser type (300), as the second oxidation zone;
- a gas/solid separator (303) such as a cyclone, positioned downstream of said first oxidation reactor (301) in a manner such as to receive a mixture leaving from the top of said first oxidation reactor (301), said mixture comprising the stream of dinitrogen (28) and the stream of partially re-oxidized redox active mass (26);
- a siphon positioned on a transport line for the stream of partially re-oxidized active mass (26) from said separator (303) to the second oxidation reactor (300), in order to provide a gas seal between said first and second oxidation reactors (301, 300).

15. The installation as claimed in any one of claims 11 to 14, comprising a compression device (202, 302) such as a compressor or a blower positioned on the first conduit sending the first fraction of a stream of air depleted in oxygen (216) to the first oxidation zone (201, 301,401).
